# EUROPEAN PATENT SPECIFICATION

(11) **EP 1 268 226 B1**
(45) Date of publication and mention of the grant of the patent: **24.03.2010**
(21) Application number: 01924764.2
(22) Date of filing: 06.04.2001
(51) Int. Cl.: B60C 23/04

(54) **TIRE CONDITION SENSOR UNIT MOUNTING ARRANGEMENT**
MONTAGEANORDNUNG FÜR REIFENZUSTANDSSENSOR
DISPOSITIF SERVANT A MONTER UN ENSEMBLE DE DETECTION DE L'ETAT D'UN PNEU

(30) Priority: 07.04.2000 FR 0004490; 02.01.2001 US 753030
(43) Date of publication of application: 02.01.2003
(73) Proprietor: TRW France SA, 78570 Andresy (FR); TRW Automotive U.S. LLC, Livonia, Michigan 48150 (US)
(72) Inventor: NIGON, Frederic, F-78570 Andresy (FR); CHENG, Robert, F-75017 Paris (FR); PONSOT, Alain, F-78170 La Celle Saint-Cloud (FR); RENAULT, Kamel, F-78110 Le Vésinet (FR); DEZORZI, Timothy, South Lyon, MI 48178 (US); STRAUB, Albert, M., Ann Arbor, MI 48105 (US)
(74) Representative: Wagner, Karl H.
(86) International application number: PCT/US2001/011216
(87) International publication number: WO 2001/076894

(56) References cited:
- FR-A- 2 661 373
- US-A- 5 798 689

## Description

### Technical Field

The present invention is generally directed to vehicle systems that have sensor units that sense tire condition parameters, such as tire pressure and tire temperature. Specifically, the present invention relates to mounting arrangements for sensor units with tires.

### Background of the Invention

Numerous tire condition monitoring systems have been developed in order to provide tire operation information to a vehicle operator. One example type of a tire condition monitoring system is a tire pressure monitoring system that detects when air pressure within a tire drops below a predetermined threshold pressure value.

There is an increasing need for the use of tire pressure monitoring systems due to the increasing use of "run-flat" tires for vehicles such as automobiles. A run-flat tire enables a vehicle to travel an extended distance after significant loss of air pressure within that tire. However, a vehicle operator may have difficulty recognizing the significant loss of air pressure within the tire because the loss of air pressure may cause little change in vehicle handling and little change in the visual appearance of the tire.

Typically, a tire pressure monitoring system includes tire-based pressure sensing components, tire-based components that provide communication links from the tires to a central receiver, and an indicator or display located on a vehicle instrument panel. In particular, the tire-based components of such a tire pressure monitoring system are provided in sensor units located inside the tires. In one known system, the sensor units transmit radio frequency signals that are received via stationary antennas that are located near the tires.

In one known system, each sensor unit is attached to an air valve. In turn, the valve is attached to an associated rim such that the sensor unit is inside the associated tire. At first glance, this solution is acceptable since the valve constitutes a convenient anchoring point. But this solution has a disadvantage of being complex from a mechanical viewpoint, particularly for fastening the valve and attached sensor unit onto the rim prior to assembly of the tire.

Another known systems disclosed e.g. in US-A-5,798,689, utilizes straps to attach the sensor units to the rims. Each strap encircles the associated rim and is tight against the rim. However, mechanical complexity may also be an issue for the use of straps.

US-A-5,798,689 was used as a basis for the preamble of claim 1 and discloses a pressure gauge of a tire pressure indicator for a set of pneumatic tires of a vehicle, said pressure gauge including a casing formed with an aperture and adapted to be secured to a metal wheel of a respective one of the pneumatic tires such that the casing is concealed by the respective one of the pneumatic tires, and a signal generating device disposed in the casing. The signal generating device wirelessly transmits a pressure signal when pressure within the respective one of the pneumatic tires is not within a predetermined normal operating pressure range.

Further, attention is drawn to FR-A-2 661 373 which discloses a pneumatic pressure detector comprising a pressure sensor fixed to the rim and associated with a transmitter device consisting of a capacitor and two coils and cooperating with a unit mounted on a non-rotating or stationary part of the vehicle, wherein the rim is made of a non-magnetic material, the sensor is fixed to an pneumatically interior side of the rim, and the transmitter device is designed to generate an electromagnetic wave adapted to transverse the rim.

### Summary of the Invention

In general, the present invention provides a tire sensor unit that is easy to assemble, handle, and mount within a tire, and that does not interfere with an inflation valve for the tire.

In accordance with one aspect, the present invention provides an arrangement for provision of vehicle tire sensory information while a tire is mounted on a wheel rim of a vehicle, as set forth in claim 1.

In accordance with another aspect, the present invention provides a method of attaching a tire condition sensor unit to a rim of a vehicle tire assembly, as set forth in claim 22.

Preferred embodiments of the present invention may be gathered from the dependent claims.

### Brief Description of the Drawings

The foregoing and other features and advantages of the present invention will become apparent to those skilled in the art to which the present invention relates upon reading the following description with reference to the accompanying drawings, in which:
Fig. 1 is a schematic cross sectional view of a tire and a rim of a wheel assembly, with the section plane going through an axle of the rim, and shows a first arrangement in accordance with the present invention;
Fig. 2 is a perspective view of a second arrangement in accordance with the present invention, with a sensor unit and two pins;
Fig. 3 is a cross sectional view of the arrangement of Fig. 2, with the section plane along an axis of a pin and with a different retaining structure;
Fig. 4 is a partially broken away view that shows a possible distribution of elements within a housing of the sensor unit;
Fig. 5 is a perspective view of a third arrangement in accordance with the present invention;
Fig. 6 is a partial perspective view of a fourth arrangement in accordance with the present invention;
Fig. 7 is a partial perspective view of a fifth arrangement in accordance with the present invention; and
Fig. 8 is a cross view showing the relationship between the housing of the sensor unit, the pin, and the stud of the arrangement of Fig. 7.

### Description of Example Embodiments

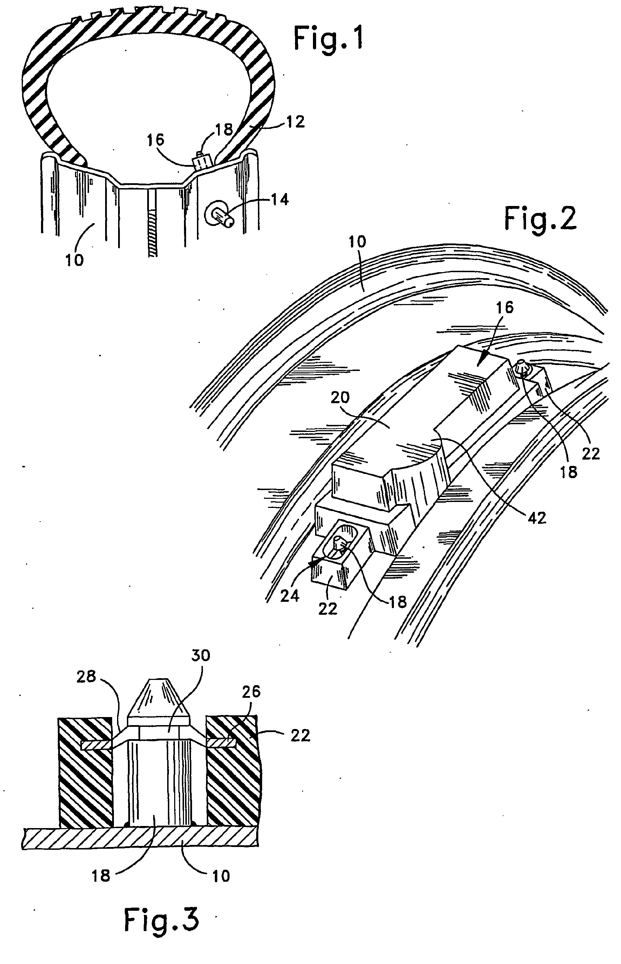

Fig. 1 shows a rim 10 of a vehicle wheel on which a tire 12 is mounted. A nozzle 14 that contains an air inflation valve passes through the rim 10. In the space delineated (i.e., bounded) by the rim 10 and the tire 12 is a pressure sensor unit 16 suitable for communicating, via radio frequency signals, with an antenna (not shown) operatively connected to a central processing unit (not shown). It is to be appreciated that tire pressure is one example of a tire parameter, and that different and/or additional parameter(s) may be sensed.

In accordance with the present invention, the sensor unit 16 is fixed relative to the rim 10 via one or more pins 18 (one visible) affixed to the rim. In the example arrangement shown in Fig. 1, the pin 18 is a stud that extends along a radial line of the rim 10. The pin 18 is fastened to the rim 10 by welding in accordance with a welding process that depends on the type of metal (e.g., steel, aluminum, etc.) comprising the rim.

In Fig. 2, wherein the elements corresponding or similar to those of FIG. 1 have the same reference numbers, the rim 10 has two pins (studs) 18 that are spaced apart and placed on the same rim circle, so that the sensor unit 16 is tangentially arranged in the circumferential direction. The sensor unit 16 has a housing box 20. In the shown example, the box 20 is made of plastic that is reinforced by non-conducting fillers. This material should be capable of withstanding maximum temperatures reached during operation, (e.g., on the order of at least 150°C).

The box 20 has two extensions 22, each of which has a hole through which one of the pins 18 passes.
The box 20 and the pins 18 have fastening means 24, generally of the type that snap on in order to lock the box onto the rim. In the example shown in Fig. 2, the fastening means 24 is provided by three elastic pads that are embedded at their base in the extension material and that are elastically engaged beneath the head of the pin 18.

In the case shown in Fig. 3, wherein elements corresponding or similar to those of the previous figures have the same reference numbers, fastening is provided via a plate 26. A base of the plate 26 is locked in the extension 22. The plate 26 has two opposite fingers 28 that are elastically engaged in a shank 30 of the pin 18, under the head. As easily seen in Fig. 3, the head of the shank 30 is advantageously conical to facilitate its introduction into the extension hole.

The lower part of the box 20 can be curved, so as to adapt to the curve of the rim 10. However, it is noted that such a solution for mating the box 20 to the rim 10 typically makes it necessary to provide a different type of box for each rim diameter.

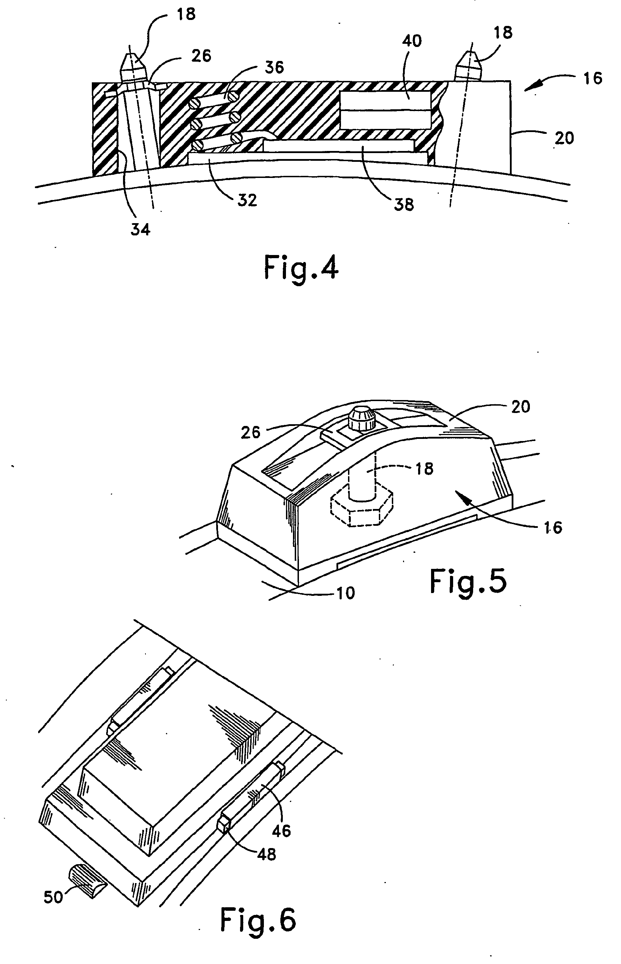

In the embodiment shown in Fig. 4, wherein elements corresponding or similar to those of the previous figures have the same reference numbers, the lower (i.e., radially inward) portion of the box 20 has a centrally located recess 32 so that only the ends of the box touch the rim 10. The fact that only two ends of the box 20 engage the rim takes into account the fact that the rim is cylindrical.

It is to be noted the embodiment of Fig. 4 can be modified such that the ends of the box 20 are of reduced size compared to the rest of the box, such that the ends of the box are extensions similar to those shown in Fig. 2. It is to be appreciated that the diameter of the rim may be as small as 13 inches in the case of a so-called "compact" vehicle. In general, the length of the sensor unit 16 should not exceed approximately 2.5 inches (e.g., 6 cm).

The holes 34 for receiving the pins 18 have a sufficient dimension in the peripheral direction for letting the pins 18 pass through until the plates 26 click into locking engagement with the pins. The holes 34 can be oblong in the tangential direction of the rim 10 (as shown) for this purpose. As noted, the pins 18 extend generally radially. It should be noted that the pins 18 are located along radial directions to facilitate their connection by means of welding. Thus, the oblong holes allow the pins to be inserted, and allow the insertion without undue force.

The sensory detecting element(s) (e.g., a sensor) and other electronic elements of the sensor unit 16 are generally embedded in the plastic material constituting the housing box 20. In the example shown in FIG. 4, the elements include a detector, an antenna 36 for emitting messages to the exterior link, electronics 38, and a battery 40 (e.g., a coin or button type battery).

Some or all of the elements may be provided in the form of an integrated circuit of specific application or ASIC. The detector can notably be of the capacitor or piezoelectric type, with a form of a computer chip containing a chamber vacuum constituting a pressure reference.

As indicated in FIG. 2, the box 20 can have a protruding space 42 wherein it is possible to house the battery 40. When the internal battery 40 powers the sensor unit 16, the sensor unit is commonly referred to as being an active unit. Generally, if the battery 40 is provided to power the sensor unit 16, a radio frequency between 315 and 915 MHz is used for the communication from the sensor unit 16. Typically, the energy consumed is very low.

The sensor unit 16 can also be of the passive type and receive the necessary energy when operating in the form of an interrogation by radio electrical means located exterior to the tire (e.g., at the vehicle).
In this case, the sensor unit 16 has a transponder associated with a temporary energy storage condenser. Circuitry is provided for converting the received interrogation signal into a voltage potential stored on the condenser. For such an embodiment, the energy storage condenser is preferably integrated into the electronics. Also, for such an embodiment, it is preferable to place the antenna 36 outside the box 20. Generally, if the energy to power the sensor unit 16 is derived from an interrogation signal, a frequency between 5 kHz and 15 MHz is used for the communication exchange.

In the embodiment shown in FIG. 5, wherein elements corresponding or similar to those of the previous figures have the same reference numbers, the box 20 is held by a single, central pin (stud) 18. The box 20 is locked onto the pin 18 by an elastic plate 26 similar to that shown in FIG. 3.

To prevent the box from turning, it can be placed against the side of the rim 10, as shown in FIG. 5. In addition to or as a replacement of the foregoing, the pin 18 and the corresponding hole in the box 20 are configured to mate. The mating between the pin 18 and the box 20 is such that the box is prevented from turning. For example the pin is polygonal, at least at the base, and the hole is correspondingly polygonal.
In one example, as indicated schematically in FIG. 5, a six-sided polygonal shape is used, and in another example, a square shape is used.

Fig. 6 shows yet another embodiment wherein the pins are reduced to slides 46 fastened to the rim 10. The slides (pins) 46 mate with integral tenons 48 of the box 20. Stops are fastened to the rim 10 at locations adjacent to the ends of the box 20. Once the slides 46 are completely engaged with the tenons 48, the box 20, due to its elasticity, is locked between the stops 50.

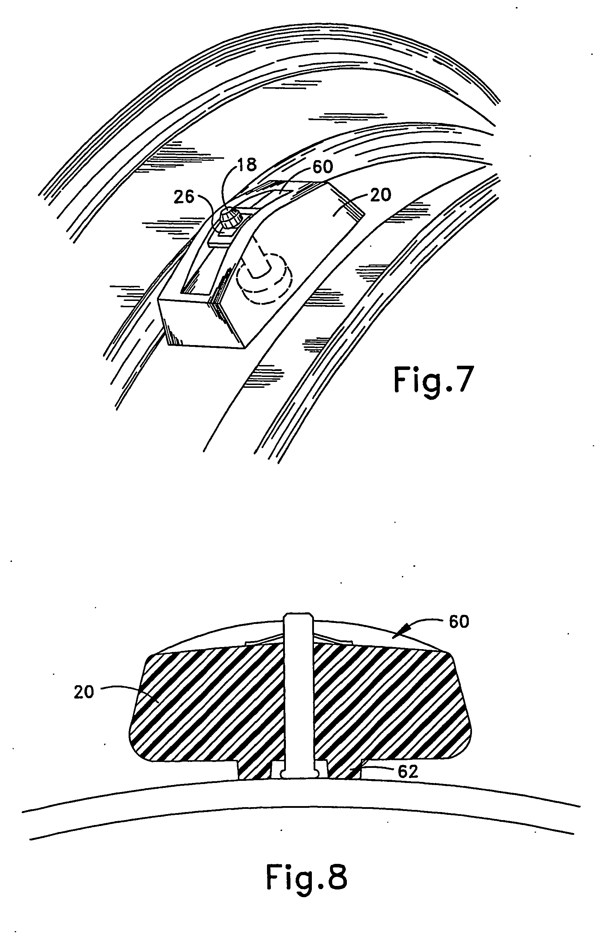

The embodiment shown in Figs. 7 and 8, wherein elements corresponding or similar to those of the previous figures have the same reference numbers. A single, central pin (stud) 18 holds the housing box 20. It is to be noted that the components (e.g., the electronics 38, the antenna 36, and the battery 40) within the housing box 20 are not shown, for simplicity. Accordingly, the section of the housing box 20 merely shows the material (e.g., plastic) of the housing box. It is to be appreciated that the components are present (e.g., embedded into the material of the housing box 20).

The embodiment of Figs. 7 and 8 is similar to the embodiment of Fig. 5. In particular, the housing box 20 has a recess 60 that extends generally in a tangential direction of the rim 10. An elastic plate or clip 26 is located in the recess 60 and is engaged with the stud pin 18. The clip 26 provides a biasing force that holds and pushed the housing box 20 into engagement with the rim 10.

The embodiment of Figs. 7 and 8 is different from the embodiment of Fig. 5, in that the box 20 (Fig. 7) does not have a centrally located recess at a lower (i.e., radially inward) portion of the box 20 so that only the ends of the box touch the rim 10. Instead, the box has a circular projection 62 on its lower (i.e., radially inward) portion. The projection 62 encircles the hole through which the stud pin 18 extends. With the projection 62 engaged against the rim 10, the ends of the housing box are spaces away from the rim.

It is to be noted that various types of welding can be utilized to affix the stud pin to the rim.

The present invention can be used on cast aluminum (or even magnesium) alloy wheels as well as on rolled steel wheels. In the first case, the rim should be machined after being cast. The pin or pins shall then be butt welded on the rim after the machining phase by one of the processes that are currently well developed on aluminum, such as under inert gas or by melting under an intense electrical current. In the event of a rolled steel wheel, the pins are welded on the rim before being zinc-plated and/or coated with polymer paint, or even on the strip of steel before it is cut, rolled and welded. Butt-welding the pins makes it possible to avoid piercing the rim which would make acceptance difficult due to the degree the rim is weakened (the thickness of the rolled metal is generally on the order of 1.5 mm).

Initially, one would think that the electrical conductivity of the rims, notably those in aluminum-based alloy, and the conductivity of the metal reinforcements placed inside the tires would overly decrease the capacity of message transmission. Practice has shown that this is not the case. The decrease in electrical conductivity is low in the case of a rolled steel rim. In the extreme case of a rim in aluminum and tires whose sides contain metal reinforcements, the decrease does not exceed 30 dB.

From the above description of the invention, those skilled in the art will perceive improvements, changes and modifications. Such improvements, changes and modifications within the skill of the art are intended to be covered by the appended claims.

## Claims

1. An arrangement for provision of vehicle tire sensory information while a tire (12) is mounted on a wheel rim (10) of a vehicle, said arrangement comprising:
a sensor unit (16) for sensing a physical parameter of said tire (12) mounted on said vehicle wheel rim (10), said sensor unit (16) being incorporated in a box (20) placed inside the space delineated by the rim (10) and the tire (12) said sensor unit (16) comprising:
an element for detecting the parameter;
electronics (38) for generating radio frequency messages conveying the value of the parameter;
an emitting element (36); and
an electrical energy source (40);
**characterized in that** said sensor unit (16) is fastened to a stud (18) welded to the rim (10) and protruding toward the inside of the tire (12).

2. The arrangement as set forth in claim 1, wherein said box (20) is of an elongated form in the tangential direction of the rim (10) and only bears upon the rim (10) at two end extensions (22).

3. The arrangement as set forth in claim 1, wherein said stud (18) is a single stud to which the box (20) is fastened, and said stud (18) passes through a hole in the box (20).

4. The arrangement as set forth in claim 3, wherein the cross section of said stud (18) and the cross section of the hole of said box (20) through which said stud passes are mated to prevent said box from turning relative to said stud.

5. The arrangement as set forth in claim 1, wherein two studs (18) are welded to the rim (10) and protrude toward the inside of the tire (12), said studs (18) pass through holes (34) in the box (20), and said box (20) is fastened to said two studs.

6. The arrangement as set forth in claim 5, wherein said studs (18) are placed radially and said holes (34) through which said studs pass are oblong in shape in the tangential direction of the rim (10).

7. The arrangement as set forth in claim 1, wherein said box (20) is held onto said stud (18) via an integral elastic element (24) of said box, said integral elastic element (24) engaging a shank of said stud.

8. The arrangement as set forth in claim 1, wherein said energy source (40) includes a battery.

9. The arrangement as set forth in claim 1, wherein said energy source includes an electronic energy transformation circuit and a condenser.

10. The arrangement as set forth in claim 1, wherein said box (20) has a projecting portion (62) and only bears upon the rim (10) at said projecting portion.

11. The arrangement as set forth in claim 10, wherein said projecting portion (62) encircles said stud (18).

12. The arrangement as set forth in claim 11, wherein said box (20) is of an elongated form in the tangential direction of the rim (10) and only bears upon the rim at said projecting portion (62), with ends of said box being spaced from the rim.

13. The arrangement as set forth in claim 1, wherein said stud (18) is a tenon.

14. The arrangement as set forth in claim 1, wherein said box (20) comprises a housing having a mounting hole (34); said stud (18) extending through said mounting hole (34) of said housing (20); and said arrangement further comprising a retainer (24,26) extending between said housing (20) and said stud (18) such that said housing is held fixed relative to said stud.

15. The arrangement as set forth in claim 14, wherein said retainer (24) is a resilient bias member.

16. The arrangement as set forth in claim 14, wherein said retainer (26) is a resilient clip.

17. The arrangement as set forth in claim 14, wherein said stud (18) has a recess (30), and said retainer (26) engages said stud at said recess.

18. The arrangement as set forth in claim 14, wherein the cross section of said stud (18) and the cross section of said mounting hole (34) are mated to prevent said housing (20) from turning relative to said stud.

19. The arrangement as set forth in claim 14, wherein said stud (18) is a first stud and said mounting hole (34) is a first hole, said arrangement including a second stud welded to the rim and extending into the space bounded between the tire and the rim, said housing including a second mounting hole, said second stud extending through said second mounting hole of said housing.

20. The arrangement as set forth in claim 19, wherein said first and second studs (18) extend along radial directions of the tire and rim, said first and second holes (34) are oblong in shape in the tangential direction of the rim.

21. The arrangement as set forth in claim 19, wherein said housing includes a circular projection (62) that encircles the mounting hole (34) and the stud (18), and that engages the rim (10).

22. A method of attaching a tire condition sensor unit (16), which senses a tire condition parameter and which transmits a signal indicative of the sensed parameter, to a rim (10) of a vehicle tire assembly, said method comprising:
welding a stud (18) directly to the rim (10) to extend into a space bounded by the rim (10) and a tire (12) of the tire assembly;
locating the tire condition sensor unit (16) adjacent to the welded stud (18); and
engaging a retaining component (24,26) between the welded stud (18) and the tire condition sensor unit (16).

23. A method as set forth in claim 22, wherein said step of welding the stud (18) includes resistance welding the stud to the rim.

24. The method as set forth in claim 22, wherein said step of engaging a retaining component (24,26) between the welded stud (18) and the tire condition sensor unit (16) includes engaging the retaining component (24,26) to a shank of the welded stud (18) and engaging the retaining component (24,26) to the tire condition sensor unit (16) such that the retaining component (24,26) presses the tire condition sensor unit (16) toward the rim (10).

25. The method as set forth in claim 22, wherein said step of locating the tire condition sensor unit (16) adjacent to the welded stud (18) includes placing the stud (18) through a hole (34) of the tire condition sensor unit (16).

26. The method as set forth in claim 22, including welding a second stud (18) directly to the rim (10) to extend into the space bounded by the rim and the tire of the tire assembly, locating the tire condition sensor unit (16) adjacent to the second welded stud (18), and engaging a second retaining component between the welded stud and the tire condition sensor unit.

27. The method as set forth in claim 26, wherein said step of locating the tire condition sensor unit (16), adjacent to the second welded stud (18) includes placing the second stud (18) through a second hole (34) of the tire condition sensor unit (16).

28. The method as set forth in claim 22, including engaging the tire condition sensor unit (16) against the rim (10).

29. The method as set forth in claim 28, wherein said step of engaging the tire condition sensor unit (16) against the rim (10) includes engaging only two ends (22) of an elongate housing (20) of the tire condition sensor unit (16) against the rim (10).

30. The method as set forth in claim 28, wherein said step of engaging the tire condition sensor unit (16) against the rim (10) includes engaging only a circular projection (62) of a housing (20) of the tire condition sensor unit (16) against the rim (10), with ends of the housing (20) being spaced from the rim (10).

## Patentansprüche

1. Eine Anordnung zum Liefern von sensorischer Fahrzeugreifeninformation während ein Reifen (12) auf einer Radfelge (10) eines Fahrzeugs angebracht ist, wobei die Anordnung Folgendes aufweist:
eine Sensoreinheit (16) zum Abfühlen eines physikalischen Parameters des Reifens (12), der auf einer Felge (10) eines Fahrzeugrades angebracht ist, wobei die Sensoreinheit (16) in einem Kasten bzw. einem Behälter (20) aufgenommen ist, welcher innerhalb des Raumes angebracht ist, der durch die Felge (10) und den Reifen (12) begrenzt ist, wobei die Sensoreinheit (16) Folgendes aufweist:
ein Element zum Detektieren des Parameters;
Elektronik (38) zum Erzeugen von Hochfrequenznachrichten, welche den Wert des Parameters übermitteln;
ein Sendeelement (36); und
eine Quelle für elektrische Energie (40);
**dadurch gekennzeichnet, dass** die Sensoreinheit (16) an einem Bolzen (18) befestigt ist, welcher an die Felge (10) geschweißt ist und welcher zu der Innenseite des Reifens (12) vorsteht.

2. Anordnung gemäß Anspruch 1, wobei der Behälter (20) in der tangentialen Richtung der Felge (10) eine langgestreckte Form besitzt und nur an zwei Endausdehnungen (22) auf der Felge (10) aufliegt.

3. Anordnung gemäß Anspruch 1, wobei der Bolzen (18) ein einzelner Bolzen ist, an dem der Behälter (20) befestigt ist, und wobei der Bolzen (18) durch ein Loch in dem Behälter (20) geht.

4. Anordnung gemäß Anspruch 3, wobei der Querschnitt des Bolzens (18) und der Querschnitt des Loches des Behälters (20), durch welches der Bolzen verläuft, zusammengefügt werden, um zu verhindern, dass sich der Behälter relativ zu dem Bolzen dreht.

5. Anordnung gemäß Anspruch 1, wobei zwei Bolzen (18) an die Felge (10) geschweißt sind und zur Innenseite des Reifens (12) vorstehen, wobei die Bolzen (18) durch Löcher (34) in dem Behälter (20) hindurch verlaufen, und wobei der Behälter (20) an den zwei Bolzen befestigt ist.

6. Anordnung gemäß Anspruch 5, wobei die Bolzen (18) radial angebracht sind und wobei die Löcher (34) durch welche die Bolzen hindurchgehen, eine längliche Form in der tangentialen Richtung der Felge (10) besitzen.

7. Anordnung gemäß Anspruch 1, wobei der Behälter (20) durch ein integriertes elastisches Element (24) des Behälters auf dem Bolzen (18)gehalten wird, wobei das integrierte elastische Element (24) mit einem Schaft des Bolzens in Eingriff steht.

8. Anordnung gemäß Anspruch 1, wobei die Energiequelle (40) eine Batterie aufweist.

9. Anordnung gemäß Anspruch 1, wobei die Energiequelle eine elektronische Energieumwandungsschaltung und einen Kondensator aufweist.

10. Anordnung gemäß Anspruch 1, wobei der Behälter (20) einen vorstehenden Teil (62) besitzt und auf der Felge (10) nur auf dem vorstehenden Teil aufliegt.

11. Anordnung gemäß Anspruch 10, wobei der vorstehende Teil (62) den Bolzen (18) umgibt.

12. Anordnung gemäß Anspruch 11, wobei der Behälter (20) eine langgestreckte Form in der tangentialen Richtung der Felge (10) besitzt und auf der Felge nur auf dem vorstehenden Teil (62) aufliegt, wobei die Enden des Behälters von der Felge beabstandet sind.

13. Anordnung gemäß Anspruch 1, wobei der Bolzen (18) ein Zapfen ist.

14. Anordnung gemäß Anspruch 1, wobei der Behälter (20) ein Gehäuse mit einem Befestigungsloch (34) aufweist,
wobei der Bolzen (18) sich durch das Befestigungsloch (34) des Gehäuses (20) erstreckt; und
wobei die Anordnung ferner Folgendes aufweist:
eine Halterung (24, 26), die sich zwischen dem Gehäuse (20) und dem Bolzen (18) derart erstreckt, dass das Gehäuse relativ zu dem Bolzen festgehalten wird.

15. Anordnung gemäß Anspruch 14, wobei die Halterung (24) ein elastisches Vorspannelement ist.

16. Anordnung gemäß Anspruch 14, wobei die Halterung (26) eine elastische Klammer ist.

17. Anordnung gemäß Anspruch 14, wobei der Bolzen (18) eine Ausnehmung (30) besitzt und wobei die Halterung (26) mit dem Bolzen an der Ausnehmung in Eingriff steht.

18. Anordnung gemäß Anspruch 14, wobei der Querschnitt des Bolzens (18) und der Querschnitt des Befestigungslochs (34) zusammengefügt werden, um zu verhindern, dass sich das Gehäuse (20) relativ zu dem Bolzen dreht.

19. Anordnung gemäß Anspruch 14, wobei der Bolzen (18) ein erster Bolzen ist und wobei das Befestigungsloch (34) ein erstes Loch ist, wobei die Anordnung einen zweiten Bolzen aufweist, welcher an die Felge geschweißt ist und sich in den Raum zwischen dem Reifen und der Felge erstreckt, wobei das Gehäuse ein zweites Befestigungsloch aufweist, wobei der zweite Bolzen sich durch das zweite Befestigungsloch des Gehäuses erstreckt.

20. Anordnung gemäß Anspruch 19, wobei sich die ersten und zweiten Bolzen (18) entlang der radialen Richtungen von Reifen und Felge erstrecken, wobei die ersten und zweiten Löcher (34) eine längliche Form in der tangentialen Richtung der Felge besitzen.

21. Anordnung gemäß Anspruch 19, wobei das Gehäuse einen ringförmigen Vorsprung (62) aufweist, welcher das Befestigungsloch (34) und den Bolzen (18) umgibt, und welcher mit der Felge (10) in Eingriff steht.

22. Verfahren zum Anbringen einer Reifenzustandssensoreinheit (16), welche einen Reifenzustandsparameter abfühlt und welche ein Signal, welches eine Anzeige für den abgefühlten Parameter bildet, an eine Felge (10) einer Fahrzeugreifenanordnung überträgt, wobei das Verfahren Folgendes aufweist:
Schweißen eines Bolzens (18) direkt an die Felge (10), um sich in einen Raum zu erstrecken, welcher durch die Felge (10) und einen Reifen (12) der Reifenanordnung begrenzt wird;
Platzieren der Reifenzustandssensoreinheit (16) benachbart zu dem aufgeschweißten Bolzen (18); und
Eingreifen einer Halterungskomponente (24, 26) zwischen dem aufgeschweißten Bolzen (18) und der Reifenzustandssensoreinheit (16).

23. Verfahren gemäß Anspruch 22, wobei der Schritt des Schweißens des Bolzens (18) ein Widerstandsschweißen des Bolzens an die Felge umfasst.

24. Verfahren gemäß Anspruch 22, wobei der Schritt des In-Eingriff-Bringens einer Halterungskomponente (24, 26) zwischen dem aufgeschweißten Bolzen (18) und der Reifenzustandssensoreinheit (16) das In-Eingriff-Bringen der Halterungskomponente (24, 26) mit einem Schaft des aufgeschweißten Bolzens (18) und das In-Eingriff-Bringen der Halterungskomponente (24, 26) mit der Reifenzustandssensoreinheit (16) einschließt, so dass die Halterungskomponente (24, 26) die Reifenzustandssensoreinheit (16) zu der Felge (10) hindrückt.

25. Verfahren gemäß Anspruch 22, wobei der Schritt des Platzierens der Reifenzustandssensoreinheit (16) benachbart zu dem aufgeschweißten Bolzen (18) das Platzieren des Bolzens (18) durch ein Loch (34) der Reifenzustandssensoreinheit (16) umfasst.

26. Verfahren gemäß Anspruch 22, welches das Schweißen eines zweiten Bolzens (18) direkt an die Felge (10) umfasst, um sich in den Raum zu erstrecken, der durch die Felge und den Reifen der Reifenanordnung begrenzt wird, das Platzieren der Reifenzustandssensoreinheit (16) benachbart zu dem zweiten aufgeschweißten Bolzen (18) und das In-Eingriff-Bringen einer zweiten Halterungskomponente zwischen dem aufgeschweißten Bolzen und der Reifenzustandssensoreinheit.

27. Verfahren gemäß Anspruch 26, wobei der Schritt des Platzierens der Reifenzustandssensoreinheit (16) benachbart zu dem zweiten aufgeschweißten Bolzen (18) das Platzieren des zweiten Bolzens (18) durch ein zweites Loch (34) der Reifenzustandssensoreinheit (16) aufweist.

28. Verfahren gemäß Anspruch 22, welches einschließt, die Reifenzustandssensoreinheit (16) gegen die Felge (10) in Eingriff zu bringen.

29. Verfahren gemäß Anspruch 28, wobei der Schritt des In-Eingriff-Bringens der Reifenzustandssensoreinheit (16) gegen die Felge (10) einschließt, nur zwei Enden (22) eines lang gestreckten Gehäuses (20) der Reifenzustandssensoreinheit (16) gegen die Felge (10) in Eingriff zu bringen.

30. Verfahren gemäß Anspruch 28, wobei der Schritt des In-Eingriff-Bringens der Reifenzustandssensoreinheit (16) gegen die Felge (10) aufweist, nur einen ringförmigen Vorsprung (62) eines Gehäuses (20) der Reifenzustandssensoreinheit (16) gegen die Felge (10) mit den Enden des Gehäuses (20), welche von der Felge (10) beabstandet sind, in Eingriff zu bringen.

## Revendications

1. Agencement destiné à fournir des informations de capteurs de pneumatique d'un véhicule alors qu'un pneumatique (12) est monté sur la jante (10) d'une roue d'un véhicule, ledit agencement comprenant :
une unité de capteur (16) destinée à détecter un paramètre physique dudit pneumatique (12) monté sur ladite jante (10) d'une roue d'un véhicule, ladite unité de capteur (16) étant intégrée dans un boîtier (20) placé à l'intérieur de l'espace, délimité par la jante (10) et le pneumatique (12) et ladite unité de capteur (16) comprenant :
un élément destiné à détecter le paramètre ;
des circuits électroniques (38) destinés à produire des messages de radiofréquences transportant la valeur du paramètre ;
un élément émetteur (36) ; et
une source d'énergie électrique (40) ;
**caractérisé en ce que** ladite unité de capteur (16) est fixée sur un goujon (18) soudé sur la jante (10) et faisant saillie vers l'intérieur du pneumatique (12).

2. Agencement selon la revendication 1, dans lequel ledit boîtier (20) possède une forme allongée dans la direction tangentielle de la jante (10) et ne porte sur la jante (10) qu'à ses deux extrémités (22).

3. Agencement selon la revendication 1, dans lequel ledit goujon (18) est un goujon unique sur lequel le boîtier (20) est fixé et ledit goujon (18) passe dans un trou ménagé dans le boîtier (20).

4. Agencement selon la revendication 3, dans lequel la section transversale dudit goujon (18) et la section transversale du trou dans ledit boîtier (20), au travers duquel passe ledit goujon (18), se correspondent afin d'empêcher ledit boîtier de tourner par rapport audit goujon.

5. Agencement selon la revendication 1, dans lequel deux goujons (18) sont soudés sur la jante (10) et font saillie vers l'intérieur du pneumatique (12), lesdits goujons (18) traversant des trous (34) dans le boîtier (20) et ledit boîtier (20) étant fixé sur lesdits deux goujons.

6. Agencement selon la revendication 5, dans lequel lesdits goujons (18) sont placés radialement et lesdits trous (34) au travers desquels passent lesdits goujons sont de forme oblongue, orientée dans la direction tangentielle de la jante (10).

7. Agencement selon la revendication 1, dans lequel ledit boîtier (20) est maintenu sur ledit goujon (18) par un élément élastique intégral (24) dudit boîtier (20), ledit élément élastique intégral (24) s'engageant sur la tige dudit goujon.

8. Agencement selon la revendication 1, dans lequel ladite source d'énergie (40) comprend une batterie.

9. Agencement selon la revendication 1, dans lequel ladite source d'énergie comprend un circuit de transformation de l'énergie électrique et un condensateur.

10. Agencement selon la revendication 1, dans lequel ledit boîtier (20) a une partie en saillie (62) et ne porte sur la jante (10) que par ladite partie en saillie.

11. Agencement selon la revendication 10, dans lequel ladite partie en saillie (62) entoure ledit goujon (18).

12. Agencement selon la revendication 11, dans lequel ledit boîtier (20) possède une forme allongée dans la direction tangentielle de la jante (10) et ne porte sur la jante que par ladite partie en saillie (62), les extrémités dudit boîtier étant écartées de la jante.

13. Agencement selon la revendication 1, dans lequel ledit goujon (18) est un tenon.

14. Agencement selon la revendication 1, dans lequel ledit boîtier (20) comprend un carter possédant un trou de montage (34), ledit goujon (18) s'étendant au travers dudit trou de montage (34) dudit boîtier (20) ; et
ledit agencement comprenant en outre un élément de retenue (24, 26) s'étendant entre ledit carter (20) et ledit goujon (18) si bien que ledit carter est immobilisé par rapport audit goujon.

15. Agencement selon la revendication 14, dans lequel ledit élément de retenue (24) est un élément élastique de précontrainte.

16. Agencement selon la revendication 14, dans lequel ledit élément de retenue (26) est un clip élastique.

17. Agencement selon la revendication 14, dans lequel ledit goujon (18) possède un décrochement (30) et ledit élément de retenue (26) s'engage dans ledit goujon au niveau dudit décrochement.

18. Agencement selon la revendication 14, dans lequel la section transversale dudit goujon (18) et la section transversale dudit trou de montage (34) se correspondent afin d'empêcher ledit carter (20) de tourner par rapport audit goujon.

19. Agencement selon la revendication 14, dans lequel ledit goujon (18) est un premier goujon et ledit trou de montage (34) est un premier trou de montage, ledit agencement comprenant un second goujon soudé à la jante et s'étendant dans l'espace délimité entre le pneumatique et la jante, ledit carter comprenant un second trou de montage et ledit second goujon s'étendant au travers dudit second trou de montage dudit carter.

20. Agencement selon la revendication 19, dans lequel lesdits premier et second goujons (18) s'étendent dans des directions radiales du pneumatique et de la jante, lesdits premier et second trous (34) sont de forme oblongue orientée dans la direction tangentielle de la jante.

21. Agencement selon la revendication 19, dans lequel ledit carter comprend une saillie circulaire (62) qui entoure le trou de montage (34) et le goujon (18) et qui est engagée contre la jante (10).

22. Procédé de fixation d'une unité de capteur d'état de pneumatique (16) qui détecte un paramètre de l'état du pneumatique et qui émet un signal indicatif du paramètre détecté vers une jante (10) d'un ensemble de pneumatique de véhicule, ledit procédé comprenant les étapes consistant à :
souder un goujon (18) directement sur la jante (10) afin qu'il s'étende dans un espace délimité par la jante (10) et un pneumatique (12) de l'ensemble de pneumatique ;
placer l'unit de capteur d'état de pneumatique (16) près du goujon soudé (18) ; et
engager un élément de retenue (24, 26) entre le goujon soudé (18) et l'unité de capteur d'état de pneumatique (16).

23. Procédé selon la revendication 22, dans lequel ladite étape de soudage du goujon (18) comprend le soudage du goujon sur la jante par résistance.

24. Procédé selon la revendication 22, dans lequel ladite étape d'engagement d'un élément de retenue (24, 26) entre le goujon soudé (18) et l'unité de capteur d'état de pneumatique (16) comprend l'engagement de l'élément de retenue (24, 26) sur une tige du goujon soudé (18) et l'engagement de l'élément de retenue (24, 26) sur l'unité de capteur d'état de pneumatique (16) afin que l'élément de retenue (24, 26) presse l'unité de capteur d'état de pneumatique (16) dans la direction de la jante (10).

25. Procédé selon la revendication 22, dans lequel ladite étape de placement de l'unité de capteur d'état de pneumatique (16) près du goujon soudé (18) comprend le placement du goujon (18) dans un trou (34) de l'unité de capteur d'état de pneumatique (16).

26. Procédé selon la revendication 22, comprenant en outre les étapes consistant à souder un second goujon (18) directement sur la jante (10) afin qu'il s'étende dans l'espace délimité par la jante et par le pneumatique de l'ensemble de pneumatique, à placer l'unité de capteur d'état de pneumatique (16) près du second goujon soudé (18) et à engager un second élément de retenue entre le goujon soudé et l'unité de capteur d'état de pneumatique.

27. Procédé selon la revendication 26, dans lequel ladite étape de placement de l'unité de capteur d'état de pneumatique (16) près du second goujon soudé (18) comprend le placement du second goujon (18) dans un second trou (34) de l'unité de capteur d'état de pneumatique (16).

28. Procédé selon la revendication 22, comprenant l'étape consistant à engager l'unité de capteur d'état de pneumatique (16) contre la jante (10).

29. Procédé selon la revendication 28, dans lequel ladite étape d'engagement de l'unité de capteur d'état de pneumatique' (16) contre la jante (10) comprend l'engagement contre la jante (10) des seules deux extrémités (22) d'un carter allongé (20) de l'unité de capteur d'état de pneumatique (16).

30. Procédé selon la revendication 28, dans lequel ladite étape d'engagement de l'unité de capteur d'état de pneumatique (16) contre la jante (10) comprend l'engagement contre la jante (10) d'une seule saillie circulaire (62) d'un carter (20) de l'unité de capteur d'état de pneumatique (16), les extrémités du carter (20) étant écartées de la jante (10).
